# FASCICULE DE BREVET EUROPEEN

(11) **EP 3 531 102 B1**
(45) Date de publication et mention de la délivrance du brevet: **13.05.2020**
(21) Numéro de dépôt: 19157165.2
(22) Date de dépôt: 14.02.2019
(51) Int. Cl.: G01M 17/08, G01M 11/08

(54) **DISPOSITIF D'INSPECTION DE SOUS-CHÂSSIS DE VÉHICULE FERROVIAIRE ET PROCÉDÉ D'INSPECTION CORRESPONDANT**
VERFAHREN UND VORRICHTUNG ZUR INSPEKTION DES HILFSRAHMENS EINES SCHIENENFAHRZEUGS
DEVICE FOR INSPECTING SUBFRAMES OF A RAILWAY VEHICLE AND CORRESPONDING INSPECTION METHOD

(30) Priorité: 22.02.2018 FR 1851507
(43) Date de publication de la demande: 28.08.2019
(73) Titulaire: ALSTOM Transport Technologies, 93400 Saint-Ouen (FR)
(72) Inventeur: BEHETY, Norbert, 67500 HAGUENAU (FR)
(74) Mandataire: Lavoix

(56) Documents cités:
- EP-A1- 3 192 716
- CN-A- 1 562 686
- GB-A- 2 546 344

## Description

La présente invention concerne le domaine des inspections de maintenance de véhicules ferroviaires, qui doivent avoir lieu à intervalles réguliers, pour garantir leur intégrité et par là, la sécurité des personnes et biens transportés. Ces inspections sont des inspections visuelles réalisées par des opérateurs humains. Elles nécessitent l'installation des véhicules ferroviaires sur des voies ferroviaires d'inspection dédiées (rails sur des fosses, rails surélevés ...), ce qui affecte la disponibilité des véhicules ferroviaires, leur occasionne des déplacements spécifiques et contribue à la saturation des infrastructures, tout en imposant aux opérateurs humains des conditions de travail malaisées, et peu favorables en termes de santé et de sécurité. En outre, comme 90% des organes inspectés sont déterminés conformes à l'issue de l'inspection, un relâchement de la concentration nécessaire à ces inspections peut être redouté.

Le document EP3192716 décrit un dispositif de détection selon l'état de la technique.

A cet effet, suivant un premier aspect, l'invention propose un dispositif d'inspection de sous-châssis de véhicule ferroviaire, adapté pour se déplacer sous un véhicule ferroviaire entre les rails de la voie de circulation ferroviaire dudit véhicule ferroviaire caractérisé en ce qu'il comprend :
- un système moteur adapté pour déplacer le long des rails le dispositif d'inspection ;
- un bloc applicatif comprenant au moins un élément parmi un capteur d'images adapté pour capturer des images sous le châssis du véhicule ferroviaire inspecté et un dispositif de mesures adapté pour effectuer des mesures relatives audit sous-châssis, ledit bloc applicatif étant adapté pour délivrer à un bloc de traitement des données capturées ou mesurées par l'élément ;
- le bloc de traitement, adapté pour traiter les données délivrées par le bloc applicatif et déterminer un statut d'inspection du véhicule ferroviaire inspecté en fonction d'au moins lesdites données traitées.

Un tel dispositif d'inspection de sous-châssis de véhicule ferroviaire permet un accès facilité aux zones sous-châssis comprenant tous les équipements et organes qui se trouvent sous le châssis (exemples : roues, essieux, réducteurs, organes de frein, câblage, disques, etc), sans nécessiter de déplacements spécifiques du véhicule ferroviaire, ni de voies spéciales de maintenance, tout en permettant aux opérateurs humains de travailler dans un environnement confortable. Il permet en outre de systématiser les tâches d'inspection et le processus de prise de décision, et de les accélérer, réduisant ainsi le temps d'inspection, et le risque d'erreur. Une alarme pourra n'être générée qu'en cas de défaut détecté ou de d'échec du processus d'inspection.

Dans des modes de réalisation, le dispositif d'inspection de châssis de véhicule ferroviaire suivant l'invention comporte en outre une ou plusieurs des caractéristiques suivantes :
- le bloc de traitement est en outre adapté pour commander le système moteur, selon un mode de fonctionnement, en fonction de commandes de pilotage reçues en temps réel depuis une station de supervision via un récepteur de télécommunication sans fil ou en fonction de séquences de commandes prédéfinies mémorisées dans une mémoire du dispositif d'inspection ou en fonction de commandes délivrées au bloc de traitement par le bloc applicatif ;
- le dispositif d'inspection comprend en outre un bras articulé amovible et est adapté pour détecter une circonstance potentiellement dangereuse, et pour en cas de telle détection, basculer dans un mode de sécurité comprenant l'arrêt du déplacement du dispositif d'inspection le long des rails et la rétraction du bras articulé lorsque ce dernier est installé sur le dispositif d'inspection ;
- le dispositif d'inspection est adapté pour détecter toute circonstance potentiellement dangereuse d'un ou plusieurs types donnés parmi les types suivants : perte de communication avec la station de supervision, niveau insuffisant d'alimentation en énergie, mouvement du véhicule ferroviaire inspecté, perte de l'aptitude du dispositif d'inspection à se localiser, présence d'un obstacle dans la direction de déplacement du dispositif d'inspection ;
- le dispositif d'inspection comprend un bloc d'émission et réception de télécommunication sans fil, adapté pour émettre des images capturées ou traitées à destination d'une station de supervision ;
- le bloc de traitement est en outre adapté pour identifier quel composant du véhicule ferroviaire figure sur une image capturée, pour sélectionner, en fonction du composant identifié, un programme d'ordinateur d'inspection détectant des anomalies sur ledit composant, pour fournir à l'issue de l'exécution dudit programme le statut d'inspection et émettre à destination de la station de supervision, via le bloc d'émission et réception, les données d'image associées avec un champ d'information indiquant ledit statut d'inspection ;
- ledit programme d'ordinateur d'inspection détecte si le composant présente une anomalie en fonction de l'image capturée, caractérise une anomalie détectée, et indique dans ledit champ d'information ou dans les données d'image à émettre, l'anomalie détectée et sa caractérisation ;
- le dispositif d'inspection comprend une interface spécifiée avec le bloc applicatif, dans lequel le bloc applicatif monté sur le dispositif d'inspection est amovible et interchangeable avec tout bloc applicatif d'un ensemble de blocs applicatifs présentant une interface propre à s'interfacer avec ladite interface spécifiée, et dans lequel des commandes depuis un bloc applicatif desdits blocs applicatifs qui est monté sur le dispositif d'inspection, et qui sont destinées au bloc de traitement ou inversement depuis le bloc de traitement à destination du bloc applicatif, et relatives à un traitement d'image ou de mesures ou à un déplacement, ne sont mises en oeuvre par leur destinataire qu'à partir de la réalisation avec succès d'un processus d'appariement entre ledit bloc applicatif et le bloc de traitement où le bloc applicatif doit présenter un code stocké dans le bloc de traitement et dans le bloc applicatif préalablement au montage dudit bloc applicatif sur le dispositif d'inspection ;
- le dispositif d'inspection est portatif.

Suivant un deuxième aspect, l'invention propose un procédé d'inspection de sous-châssis de véhicule ferroviaire à l'aide d'un dispositif d'inspection selon l'une des revendications précédentes, adapté pour se déplacer sous un véhicule ferroviaire entre les rails de la voie de circulation ferroviaire dudit véhicule ferroviaire, ledit procédé comprenant les étapes suivantes :
- déplacement le long des rails du dispositif d'inspection ;
- capture, par le bloc applicatif, d'images sous le châssis du véhicule ferroviaire inspecté ou mesures, par le bloc applicatif, relatives audit sous-châssis par ledit dispositif ; et délivrance au bloc de traitement desdites données capturées ou mesurées ;
- traitement par le bloc de traitement du dispositif d'inspection, des données délivrées par le bloc applicatif et détermination, par le bloc de traitement, d'un statut d'inspection du véhicule ferroviaire inspecté en fonction d'au moins lesdites données traitées.

Ces caractéristiques et avantages de l'invention apparaîtront à la lecture de la description qui va suivre, donnée uniquement à titre d'exemple, et faite en référence aux dessins annexés, sur lesquels :
- la figure 1 représente une vue schématique d'un dispositif d'inspection de sous-châssis de véhicule ferroviaire dans un mode de réalisation de l'invention ;
- la figure 2 est une vue fonctionnelle d'un dispositif d'inspection de sous-châssis de véhicule ferroviaire dans un mode de réalisation de l'invention ;
- les figures 3 et 4 sont des vues schématiques de situations de déploiement du bras d'un dispositif d'inspection de sous-châssis de véhicule ferroviaire dans un mode de réalisation de l'invention ;
- la figure 5 est un organigramme d'étapes mises en oeuvre dans un mode de réalisation de l'invention.

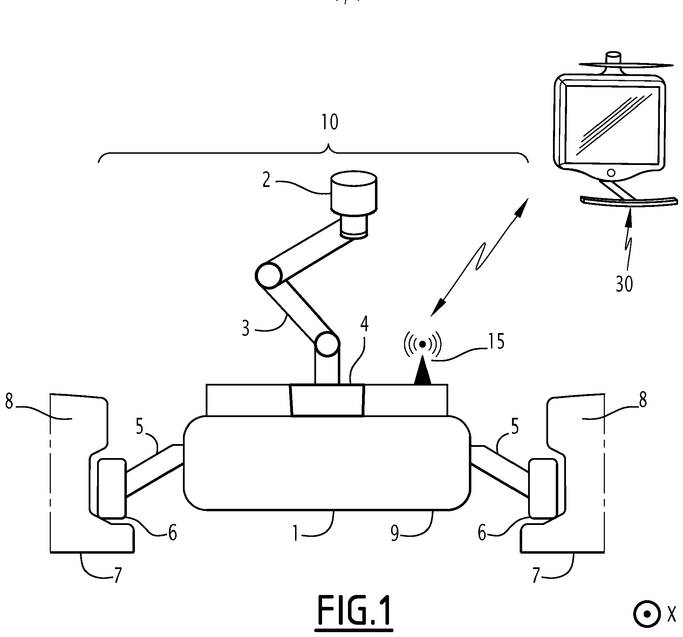

La figure 1 représente une vue schématique, de derrière, d'un dispositif d'inspection 10 de sous-châssis de véhicule ferroviaire dans un mode de réalisation de l'invention.

Ce dispositif d'inspection 10 comprend dans le cas considéré un robot 1 et un bloc applicatif 2. Il est adapté pour inspecter le châssis d'un véhicule ferroviaire (non représenté) disposé sur les rails d'une voie de circulation ferroviaire 7. Le véhicule inspecté, sous tension ou non, est selon les cas une locomotive ou une voiture ou un wagon d'un train ou d'un tramway etc.

La voie de circulation ferroviaire 7, dans le cas considéré, s'étend perpendiculairement au plan de la figure 1, le long de l'axe X. Cette voie de circulation 7 sur laquelle les véhicules ferroviaires circulent le long de l'axe X, ou stationnent notamment lors d'une inspection de maintenance, comprend deux rails 8 s'étendant parallèlement à l'axe X.

Le robot 1 comprend une base 9 et, dans le cas considéré, un bras 3, dans le cas considéré, qui est articulé à 6 axes de rotation.

La base 9 abrite des éléments (non représentés) tels qu'un moteur, une batterie, une centrale à inertie, des cartes à puce portant un ou plusieurs microcontrôleur(s) et mémoires utilisés pour effectuer différents traitements algorithmiques, notamment des traitements d'images et de détection d'anomalies. La base 9 comporte des roues 6, par exemple quatre roues, chacune entraînée en rotation par le moteur via un arbre 5.

Dans le cas considéré, les roues 6 sont disposées sur le pied des rails 8, deux roues sont sur le pied du rail gauche, les deux autres roues sur le pied du rail droit. Le déplacement du dispositif d'inspection 10 sous l'effet de l'entraînement des roues 6 par le moteur via les arbres 5 se fait le long des rails, entre les rails, le dispositif d'inspection 10 étant ainsi guidé par les pieds de rails qui lui servent de support.

Dans un autre mode de réalisation, des organes de guidage, adaptés pour coopérer avec les rails pour guider le dispositif d'inspection le long des rails, par exemple entre lesdits rails, sont installés. Par exemple des pistes de circulation des roues, dédiées au guidage du robot et parallèles aux rails, sont fixées aux rails.

Le bras 3, accessoire optionnel du dispositif d'inspection, est un bras articulé 3, amovible, dont la position est réglable et commandable, par des commandes qui lui sont transmises par le robot 1 quand il est installé sur la base 9, pour positionner le bloc applicatif 2, quand ce dernier est disposé sur le bras, à des emplacements choisis pour inspecter les différents composants du véhicule ferroviaire à inspecter.

Dans le cas représenté en figure 1, le bras 3 est présent dans le dispositif d'inspection 10 et le bloc applicatif 2 est connecté à l'extrémité du bras 3 qui est à l'opposé de la base 2. Dans d'autres configurations, le bloc applicatif 2 est connecté directement sur un adaptateur de montage prenant la place du pied 4 du bras et le bras 3 n'est alors pas installé sur la base 9 (les mêmes interfaces au niveau de cet adaptateur de montage sont présentées au bloc applicatif 2 qu'au niveau de l'extrémité du bras 3 qui est à l'opposé de la base 9).

Le bloc applicatif 2 comprend selon les cas un capteur, un dispositif de mesure ...

Le bloc applicatif 2 comprend, dans le cas présent, un capteur d'images. Dans un mode de réalisation, il est par exemple amovible et peut être remplacé, dans le dispositif d'inspection 10, par un autre bloc applicatif muni des interfaces électriques, mécaniques et fonctionnelles aptes à s'interfacer avec le robot 1.

La base 9 comporte en outre une interface 15 adaptée pour télécommuniquer sans fil avec une station de supervision distante 30, notamment pour émettre vers la station 30 des images capturées par le capteur d'images 2 (et/ou des mesures si le bloc applicatif 2 comprend un dispositif de mesure) et pour recevoir de la station 30 des données, par exemple, dans un mode dit manuel, des commandes destinées aux éléments du dispositif d'inspection 10 via un bloc de traitement du dispositif d'inspection, lesdites commandes indiquant par exemple des déplacements à effectuer par le dispositif d'inspection, des prises de vues -ou des mesures ou des analyses- à réaliser etc.

La station de supervision 30 comportant une interface homme-machine 32 (par exemple munie d'un écran et d'un clavier), est adaptée pour la saisie, via le clavier, de commandes d'un opérateur et pour l'émission, par télécommunication sans fil, desdites commandes à destination du dispositif d'inspection 10. La station de supervision 30 est en outre adaptée pour afficher sur l'écran des images (et/ou mesures) et autres données émises par le dispositif d'inspection 10 et destinées à l'opérateur.

Le dispositif d'inspection 10 est portatif, dans le mode de réalisation considéré : il est d'un poids pouvant être aisément porté, en un seul ensemble ou en sous-ensembles facilement démontables, par un opérateur de maintenance (par exemple l'ensemble ou chacun des sous-ensembles de moins de 20 kg : par exemple de 10 à 20 kg).

Le dispositif d'inspection 10 est de dimensions adaptées pour se déplacer sous un véhicule ferroviaire se trouvant sur la voie ferroviaire (par exemple 1200 x 1200 x 200 mm³, sans le bras).

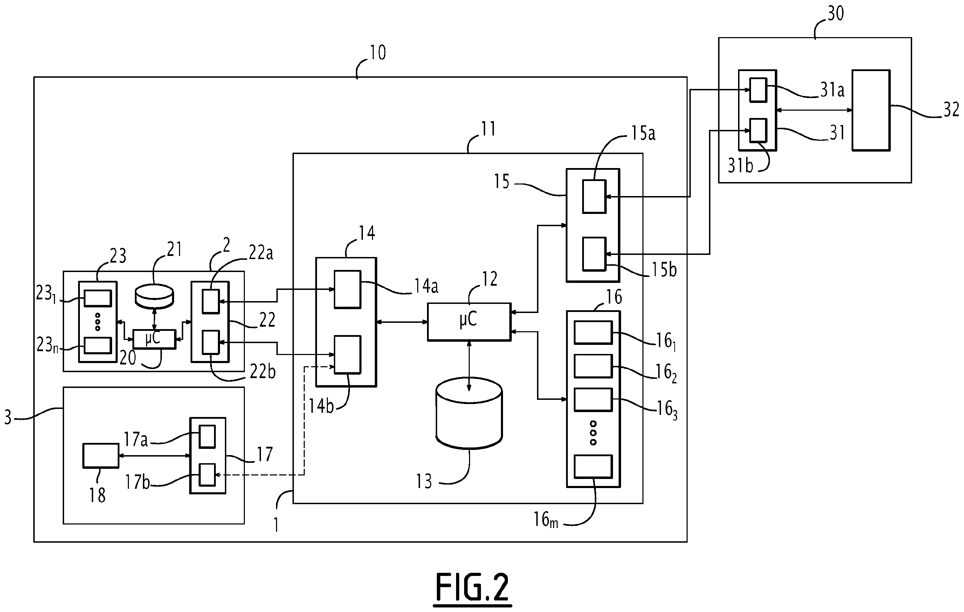

La figure 2 est une vue fonctionnelle partielle d'un ensemble comportant un dispositif d'inspection 10 de châssis de véhicule ferroviaire dans un mode de réalisation de l'invention et une station de supervision 30.

Ainsi un bloc de traitement 11 du dispositif d'inspection 10, localisé dans la base 9, comprend une interface 14 destinée notamment aux échanges avec le bloc applicatif 2, et également avec le bras 3 lorsque le bras est connecté à la base 9.

Dans le cas considéré, l'interface 14 comprend une interface 14a de type communication sans fil WiFi et une interface 14b de type USB.

Le bloc de traitement 11 comprend une interface 15 destinée aux échanges avec la station de supervision 30. Dans le cas considéré, l'interface 15 comprend notamment une interface 15a de type communication sans fil WiFi et une interface 15b de type radio.

Le bloc de traitement 11 comporte un micro-contrôleur 12 et une mémoire 13. La mémoire 13 est adaptée pour stocker des données, notamment des programmes d'ordinateur comprenant des instructions logicielles, qui lorsqu'elles sont exécutées par le micro-contrôleur 12, mettent en oeuvre divers traitements tels qu'indiqués ci-après.

Le bloc de traitement 11 comporte également un ensemble 16 de modules 16₁ à 16ₘ, parmi lesquels un module d'alimentation 16₁, par exemple une batterie électrique, destiné à pourvoir en énergie électrique le dispositif d'inspection 10, un système moteur 16₂ adapté pour entraîner les roues 6 en rotation et permettre un déplacement du dispositif d'inspection 10 conformément à des commandes de déplacement qui lui sont transmises par le microcontrôleur 12, un module de géolocalisation 16₃ comprenant une centrale inertielle, ..., un détecteur d'obstacles 16ₘ.

Dans un mode de réalisation, la batterie électrique 16₁ est adaptée pour fournir une alarme d'insuffisance d'énergie au micro-contrôleur 12 lorsque le niveau d'énergie disponible est inférieur à un seuil déterminé.

Le module de géolocalisation 16₃ est adapté pour déterminer la position courante du dispositif d'inspection 10 en fonction de données régulièrement fournies par la centrale inertielle. Le module de géolocalisation 16₃ est en outre adapté, dans un mode de réalisation, pour fournir une alarme de non-localisation au micro-contrôleur 12 lorsque la position courante du dispositif d'inspection 10 n'a pu être déterminée.

Le détecteur d'obstacles 16ₘ est adapté pour détecter tout mouvement d'un véhicule ferroviaire inspecté et tout obstacle dans la direction de déplacement du dispositif d'inspection, par exemple par télémesure Laser tels que des capteurs Lidar®, et pour fournir au micro-contrôleur 12 une alarme de mouvement lorsqu'il détecte un mouvement d'un véhicule ferroviaire inspecté et une alarme d'obstacle lorsqu'il détecte un obstacle dans la direction de déplacement du dispositif d'inspection.

Le bras 3 comporte un système 18 d'actuateurs commandables et une interface 17 pour les échanges avec l'interface 14 du bloc de traitement 11. L'interface 17 comprend une interface 17b de type USB.

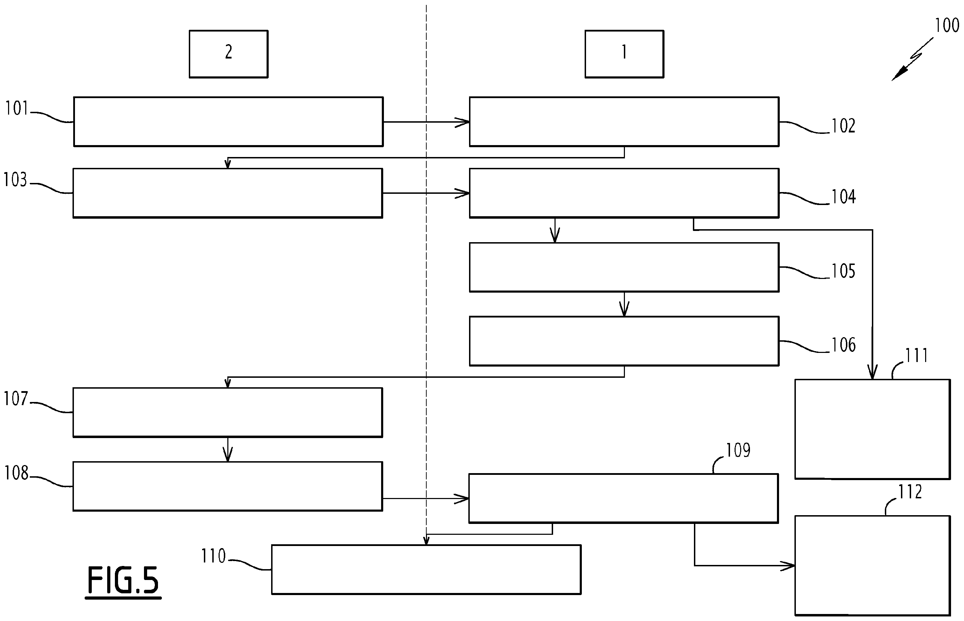

Dans le cas considéré, le système 18 d'actuateurs comprend des pivots commandables en rotation et disposés entre les sections consécutives 3.1, 3.2, 3.3, 3.4 du bras 3, dont le sens de rotation est indiqué par des flèches en figure 5. En outre, la section 3.1 engagée avec la base 2 et la section 3.4 destinée à porter le bloc d'application 2 sont adaptées pour tourner sur elles-mêmes dans le sens indiqué par les flèches en figure 5. Le système 18 d'actuateurs est adapté pour appliquer des rotations à l'ensemble de ces éléments en fonction de commandes qui lui sont fournies.

Le bloc applicatif 2 comporte dans le cas considéré un micro-contrôleur 20, une mémoire 21, une interface 22 pour les échanges avec l'interface 14 du bloc de traitement 11 et un module applicatif 23.

Le module applicatif 23 comporte n (n≥1) dispositifs 23₁,..., 23ₙ : capteur(s), dispositif(s) de mesure .... dans le cas présent, un capteur d'images.

L'interface 22 comprend une interface 22a de communication sans fil WiFi et une interface 22b de type USB (cette dernière est connectée avec l'interface 14b via l'adaptateur de montage de la base 9 quand le bloc applicatif 2 est montée sur la base 9 ; et elle est connectée avec l'interface 17b du bras 3 si le bloc applicatif 2 est monté sur le bras 3).

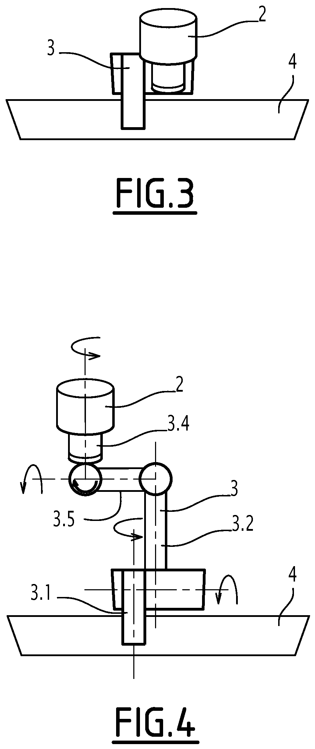

Les figures 3 et 4 illustrent des vues en coupe perpendiculaire à l'axe X de certaines des configurations différentes de déploiement du bras 3 monté sur le support 4 de la base 2, en fonction de commandes fournies au système 18 d'actuateurs.

La figure 3 représente le bras 3 rétracté au maximum (le volume alors occupé par le robot 10 avec le bras 3 rétracté est compris dans les limites de gabarit statique de véhicule ferroviaire/voie (le gabarit statique laisse un espace libre sous le châssis pour éviter des interférences du véhicule avec des équipements saillants sur la voie). Le bras, en position de repli ne doit pas dépasser la limite inférieure du gabarit, tandis que la figure 4 représente le bras 3 partiellement déployé (la hauteur du bras au-delà du pivot entre les sections 3.1 et 3.2, pour un bras complètement déployé est par exemple comprise dans une plage de [0,5 m, 1 m], par exemple égale à 80 cm).

Le dispositif d'inspection 10 est adapté pour accomplir dans un mode de réalisation des commandes de tâches élémentaires ALLER, VOIR, ANALYSER :
ALLER(M) : commande un déplacement du dispositif d'inspection 10 le long de la voie 8 -et/ou une configuration de positionnement du bras 3 le cas échéant- jusqu'à une position « M » indiquée comme lieu de la tâche commandée, à partir de laquelle une inspection pourra être menée via le dispositif d'application 2 notamment ; la réponse attendue à cette commande adressée in fine à l'émetteur initial de la commande (le bloc de traitement 10, la station de supervision 30 ou encore le bloc d'application 2 suivant le mode de fonctionnement) est une confirmation du positionnement correct une fois cette dernier exécuté ;
VOIR : commande au capteur vidéo 2 de capturer une image vidéo (ou un flux vidéo) et au bloc de traitement 11 de transmettre à la station 30 ou à un serveur extérieur ou à une mémoire interne au dispositif d'inspection 10, selon les données fournies en arguments de cette commande, l'image ou le flux vidéo ainsi capturé(e) d'une qualité compatible avec l'analyse attendue du composant inspecté (on notera que si le bloc applicatif 2 est un système de mesure, une commande qui lui sera adressée à la place de VOIR est MESURER (.) ;
ANALYSER(.) : commande au bloc de traitement 11 de comparer l'image ou le flux vidéo à une référence déjà connue, pour déterminer un statut d'inspection, par exemple un statut parmi les 3 statuts suivants : OK, NON OK, Indéterminé.

Ces tâches, isolément ou combinées en séquences peuvent être commandées au dispositif d'inspection 10 en fonction de commandes envoyées au fil de l'eau par un opérateur depuis la station 30 et reçues par le dispositif d'inspection 10 via l'interface 15 (mode dit « mode manuel »). Ces commandes sont ensuite éventuellement traitées par le microcontrôleur 12, puis transmises par ce dernier à l'entité concernée (ou aux entités concernées) par la réalisation de l'ordre, par exemple un module de l'ensemble 16, ou le capteur vidéo 2 ... Ces tâches peuvent être également commandées au dispositif d'inspection 10 par le bloc d'application 2 via les interfaces 22 et 14 ou encore en interne par des commandes préalablement enregistrées dans un programme d'ordinateur stocké dans la mémoire 13 et qui s'exécute de façon automatique sur le microcontrôleur 12 (mode dit « mode automatique »).

Dans un mode de réalisation, le micro-contrôleur 12 est adapté pour superviser l'interface 15, et pour, en fonction de cette supervision, détecter une rupture de la communication avec la station de supervision 30 en mode manuel. Il est en outre adapté pour, lorsqu'il détecte une telle rupture de communication, qu'il reçoit une alarme d'insuffisance d'énergie du module d'alimentation 16₁, une alarme de mouvement ou d'obstacle du détecteur d'obstacles 16ₘ, ou une alarme de non-localisation du module de géolocalisation 16₃, basculer dans un mode de sécurité.

Lorsque le micro-contrôleur 12 déclenche le basculement dans le mode de sécurité, il fournit au système moteur 16₂ une commande d'arrêt, suite à laquelle le moteur s'arrête, et les roues 6 sont bloquées, et lorsque le bras articulé 3 est installé sur la base 2, le micro-contrôleur 12 envoie les commandes nécessaires au système 18 d'actuateurs pour déclencher une position basse et centrée du bras 3, dans un mode de réalisation, pour déclencher la rétraction maximum du bras articulé 3 correspondant à la figure 3 dans le mode de réalisation ici considéré.

Une fois dans le mode de sécurité, selon les modes de réalisation, le dispositif d'inspection 10 doit rester inactif jusqu'à ce que l'opérateur depuis la station de supervision 30 relance son fonctionnement opérationnel et/ou il reprend automatiquement la tâche qui avait lieu avant basculement, en fonction de l'événement qui a provoqué le basculement, et/ou après une période d'inactivité par exemple de10 minutes en mode de sécurité, le dispositif d'inspection 10 est adapté pour basculer automatiquement en mode hors tension.

Dans un mode de réalisation, le dispositif d'inspection 10 est adapté pour détecter d'autres circonstances potentiellement dangereuses à la place ou en plus de celles exposées ci-dessus, et pour en cas de telles détections, enclencher également le mode de sécurité.

De telles dispositions permettent que le dispositif d'inspection 10 évite des interférences mécaniques avec le véhicule ferroviaire dans les conditions d'exploitation nominale comme défaillante.

Par ailleurs, dans un mode de réalisation, la mémoire 13 comporte en outre une table de correspondance des composants à inspecter du véhicule ferroviaire, indiquant la description du composant et sa position comparativement à un point de référence du véhicule ferroviaire. La mémoire 13 comporte aussi des programmes d'ordinateur de détection d'anomalies spécifiques chacun à un composant parmi lesdits composants de la table.

Ainsi, dans un mode de réalisation, le dispositif d'inspection 10 est adapté pour associer aux données d'images de chaque image capturée, par exemple dans un champ d'en-tête du fichier d'image, les coordonnées x, y, z de localisation du capteur d'images 2 correspondant à l'image capturée, déterminées en fonction de la position courante du dispositif d'inspection 10 déterminée par le module de géolocalisation 16₃ et de la position correspondante du bras 3, et l'orientation du capteur d'images 2.

Le dispositif d'inspection 10 est adapté pour identifier, en fonction desdites coordonnées x, y, z et de l'orientation du capteur d'images 2 associés à une image capturée et en outre des positions des composants du véhicule ferroviaire indiquées dans la table de correspondance des composants et en fonction de la position effective du point de référence du véhicule ferroviaire, quel composant de la table figure sur l'image capturée (ou quel équipement a fait l'objet de la capture ou de la mesure si on considère à la place du capteur d'images un capteur d'un autre type ou un dispositif de mesure embarqué sur le dispositif d'inspection 10).

La position du point de référence d'un véhicule ferroviaire est par exemple celle de l'axe du premier essieu avant du véhicule ferroviaire

La détermination de la position effective du point de référence comprend par exemple la détermination de l'orientation du véhicule ferroviaire, puisque les véhicules ferroviaires ne sont pas symétriques. Dans un mode de réalisation, elle est réalisée de façon automatique par le dispositif d'inspection 10, ou par l'opérateur depuis la station de supervision 30, en détectant la position de l'identifiant de la première voiture du véhicule ferroviaire.

L'identification du composant figurant sur une image capturée peut être réalisée dans un mode de réalisation, par détection d'un identifiant du composant qui serait présent sur l'image.

Le dispositif d'inspection 10 est en outre adapté pour, une fois qu'il a identifié quel composant figure sur l'image capturée, sélectionner, quand il existe, celui des programmes d'ordinateur de détection d'anomalies mémorisés dans la mémoire 13 qui est spécifique au composant ainsi déterminé et pour appliquer ce programme spécifique sur l'image.

Dans le cadre de l'exécution par le micro-contrôleur 12 du programme sélectionné, le dispositif d'inspection 10 met en oeuvre les étapes suivantes : une analyse de l'image propre au composant est effectuée en vue de détecter des anomalies présentées par le composant imagé, à l'issue de laquelle un statut de sortie de la détection est délivré, par exemple choisi parmi les statuts prédéterminés suivants :
A : quand aucune anomalie n'a été détectée ;
B : anomalie détectée avec caractérisation de l'anomalie ;
C : anomalie détectée sans caractérisation de l'anomalie ;
D : traitement d'image indisponible.

La caractérisation de l'anomalie comprend par exemple l'identification du type d'anomalie parmi un ensemble d'anomalies prédéterminées pour le programme de détection d'anomalies sélectionné, par exemple : fissure, rouille ... ; les dimensions de l'anomalie sont par exemple estimées et sa localisation peut être mise en évidence sur l'image par le programme en délimitant l'anomalie par un contour de cette dernière. Le statut est ensuite enregistré dans un champ de données associé à l'image, par exemple dans un champ d'en-tête du fichier image, de même que les données de caractérisation le cas échéant. Et si le statut de sortie est B ou C, un code de défaut est enregistré dans le journal électronique d'inspection.

Quand le statut est C, l'opérateur devra donner la caractérisation de l'anomalie après revue de l'image.

Les causes d'un statut D peuvent être diverses, par exemple : aucun programme d'ordinateur de détection d'anomalies spécifique déterminé, fichier d'image corrompu, composant non identifié. Dans un tel cas, l'opérateur devra fournir un statut après son analyse de l'image.

Puis le fichier d'image, avec ses champs d'en-tête ainsi complétés, est émis via l'interface 15 à destination de la station de supervision 30 pour par exemple, y être enregistré dans une base ou y être traité par l'opérateur le cas échéant.

Ainsi un traitement d'image ou de mesure spécifique est automatiquement réalisé par le dispositif d'inspection 10, ce qui permet d'éviter l'ajout de temps de transmission d'images.

Par ailleurs, le dispositif d'inspection 10 est tel qu'un bloc applicatif 2 peut être connecté sur le bras 3 ou sur la base 9 via un adaptateur de montage, et que ce bloc applicatif 2 opère sous le contrôle du robot 1 ou alors commande le robot 1. Un système d'interface ouverte standard du dispositif d'inspection 10, comprenant des interfaces spécifiées mécaniques, électriques, de communication ainsi que des protocoles spécifiés pour commander le dispositif d'inspection et/ou en être commandé, est proposé pour permettre à tout bloc applicatif 2 compatible de s'y interfacer (après signature d'un accord de licence), et d'y opérer en mode « Bloc applicatif passif » ou « Bloc applicatif actif ».

En effet, dans un mode « Bloc applicatif passif », le bloc applicatif 2 exécute des ordres du robot 1 (qui peut comprendre l'envoi de données), et le robot 1, lui, exécute des ordres par exemple en provenance de la station de supervision 30. Dans un mode « Bloc applicatif actif », le bloc applicatif 2 envoie des ordres et des données au robot 1 et peut recevoir des ordres en provenance de la station de supervision 30 via les interfaces 15, puis 14, puis 22. Le mode « Bloc applicatif actif » est engagé par un ordre spécifique en provenance du robot 1 et est automatiquement annulé lors d'un basculement en mode de sécurité.

Le robot 1 est par exemple adapté pour échanger 3 types d'information tant avec la station de supervision 30 qu'avec le bloc applicatif 2 :
- des données, par exemple de flux d'image (en anglais « image streaming ») ;
- des ordres : pour commander le positionnement du dispositif d'inspection 10, ou lancer des fonctions du robot 1 ou du bloc applicatif 2 ;
- des fichiers : pour transférer des fichiers aux mémoires du robot 1 ou du bloc applicatif 2, à la station de supervision 30, à des cartes mémoires USB ou encore à des serveurs distants, typiquement pour enregistrer des images et vidéos.

Les informations de type ordres (encore appelés commandes) sont traitées par la station de supervision 30, le robot 1 et le bloc applicatif 2 avec la plus haute priorité, tandis que les informations de type fichier le sont avec la plus basse priorité.

L'USB peut être utilisée dans un mode de réalisation pour les 3 types d'information, tandis que le WiFi est par exemple utilisé pour le flux d'images et les transferts de fichiers.

Le robot 1 comporte un serveur WiFi et est accessible à travers une connexion sécurisée. Un unique code d'accès lui est associé. Ce code et l'initialisation WiFi sont transférés au bloc applicatif 2 via les interfaces USB 14b et 22b, en utilisant une séquence d'appariement à la première connexion basée sur l'échange de codes d'identification. Une fois que le bloc applicatif 2 est reconnu par le bloc de traitement 11 du robot 1, l'étape d'appariement n'est plus requise. Si l'appariement échoue, aucun autre échange entre le bloc applicatif 2 et le robot 1 ne peut avoir lieu.

Dans un mode de réalisation, à un bloc applicatif 2 est associé un unique identifiant (ID), comprenant un ID de type et un ID de série. L'ID de série est attribué par le fabricant du bloc applicatif 2. L'ID type est fourni par le fabricant du robot 1 au fabricant du bloc applicatif 2 au travers d'un accord de licence. Dans un mode de réalisation, l'ID de type est valable pendant un temps déterminé, et l'appariement n'est plus effectué au-delà de ce temps.

Le procédé d'appariement est par exemple le suivant, en référence à l'ensemble d'étapes 100 représenté en figure 5. Les étapes 101 à 107 sont mises en oeuvre via USB, les étapes 108 et 109 sont mises en oeuvre via WiFi. Dans une étape 101, le bloc applicatif 2 se connecte au robot 1 via les interfaces USB 22b et 14b. Le robot 1, sous le pilotage du bloc de traitement 11 requiert alors son ID au bloc applicatif 2 dans une étape 102. Dans une étape 103, le bloc applicatif 2 fournit son ID au robot 1. Le robot 1 vérifie la validité de l'ID type extrait de l'ID fourni dans une étape 104. Si cet ID type est valide, alors le robot 10 génère un nouveau code WiFi en fonction de l'ID série extrait de l'ID fourni dans une étape 105 ; et dans une étape 106, il le fournit au bloc applicatif 2 et la connexion USB peut se poursuivre. Le bloc applicatif 2 reçoit le code WiFi généré dans une étape 107, et établit dans une étape 108 une connexion WiFi initialisée avec ce code WiFi reçu. Le robot 10 vérifie dans une étape 109 que le code WiFi ainsi utilisé pour établir la connexion WiFi est bien celui généré à l'étape 105. Dans le cas positif, l'appariement WiFi est alors aussi considéré comme valide et les connexions WiFi et USB peuvent se poursuivre, et les commandes peuvent être envoyées par la station 30 à destination du bloc applicatif 2 via le bloc de traitement 11 dans le cadre d'un fonctionnement en mode « Bloc applicatif passif » ou par le bloc applicatif 2 au bloc de traitement 11 en mode « Bloc applicatif actif ».

Si à l'étape 104, l'ID est déterminé comme non valide, l'appariement USB et WiFi échoue dans une étape 111 et aucune communication via WiFi ou via USB ne peut être mise en oeuvre entre le bloc applicatif 2 et le robot 10.

Si à l'étape 109, la vérification échoue, l'appariement WiFi est considéré comme invalide, aucune communication WiFi ne peut avoir lieu ; la connexion USB peut, elle, se poursuivre.

Le dispositif d'inspection 10 est adaptable aux principales types de voies ferroviaires (sur fosses, sur ballast, sur des lits en béton, des traverses en bois ou béton, avec éclisses, avec des rails boulonnés ou attachés), dans certains cas nécessitant un support dédié ou une voie de circulation.

Les interfaces de communication ont été décrites ci-dessus avec USB et WiFi, mais bien sûr, d'autres standards de télécommunication peuvent être utilisés à la place.

## Revendications

1. Dispositif d'inspection (10) de sous-châssis de véhicule ferroviaire, adapté pour se déplacer sous un véhicule ferroviaire entre les rails (8) de la voie (7) de circulation ferroviaire dudit véhicule ferroviaire, comprenant
- un système moteur (9) adapté pour déplacer le long des rails le dispositif d'inspection ;
- un bloc applicatif (2) comprenant au moins un élément parmi un capteur d'images adapté pour capturer des images sous le châssis du véhicule ferroviaire inspecté et un dispositif de mesures adapté pour effectuer des mesures relatives audit sous-châssis, ledit bloc applicatif étant adapté pour délivrer à un bloc de traitement (11) des données capturées ou mesurées par l'élément ; dans lequel
- le bloc de traitement est intégré au dispositif d'inspection et est adapté pour traiter les données délivrées par le bloc applicatif et déterminer un statut d'inspection du véhicule ferroviaire inspecté en fonction d'au moins lesdites données traitées,
**caractérisé en ce que**:
le bloc de traitement (11) est en outre adapté pour identifier quel composant du véhicule ferroviaire figure sur une image capturée, pour sélectionner, en fonction du composant identifié, un programme d'ordinateur d'inspection détectant des anomalies sur ledit composant, pour fournir à l'issue de l'exécution dudit programme le statut d'inspection résultant de l'exécution dudit programme.

2. Dispositif d'inspection (10) selon la revendication 1, dans lequel le bloc de traitement (11) est en outre adapté pour commander le système moteur (9), selon un mode de fonctionnement, en fonction de commandes de pilotage reçues en temps réel depuis une station de supervision (30) via un récepteur de télécommunication sans fil ou en fonction de séquences de commandes prédéfinies mémorisées dans une mémoire du dispositif d'inspection ou en fonction de commandes délivrées au bloc de traitement par le bloc applicatif (2).

3. Dispositif d'inspection (10) selon la revendication 1 ou 2, comprenant en outre un bras articulé amovible (3), ledit dispositif d'inspection étant adapté pour détecter une circonstance potentiellement dangereuse, et pour en cas d'une telle détection, basculer dans un mode de sécurité comprenant l'arrêt du déplacement du dispositif d'inspection le long des rails (8) et la rétraction du bras articulé lorsque ce dernier est installé sur le dispositif d'inspection.

4. Dispositif d'inspection (10) selon la revendication 3, adapté pour détecter toute circonstance potentiellement dangereuse d'un ou plusieurs types donnés parmi les types suivants : perte de communication avec une station de supervision, niveau insuffisant d'alimentation en énergie, mouvement du véhicule ferroviaire inspecté, perte de l'aptitude du dispositif d'inspection à se localiser, présence d'un obstacle dans la direction de déplacement du dispositif d'inspection.

5. Dispositif d'inspection (10) selon l'une des revendications précédentes, comprenant un bloc d'émission et réception de télécommunication sans fil (14), adapté pour émettre des images capturées ou traitées à destination d'une station de supervision (30), et le bloc de traitement (11) est en outre adapté pour émettre à destination de la station de supervision, via le bloc d'émission et réception, les données d'image associées avec un champ d'information indiquant ledit statut d'inspection.

6. Dispositif d'inspection (10) selon l'une des revendications précédentes, dans lequel ledit programme d'ordinateur d'inspection détecte si le composant présente une anomalie en fonction de l'image capturée, caractérise une anomalie détectée, et indique dans ledit champ d'information ou dans les données d'image à émettre, l'anomalie détectée et sa caractérisation.

7. Dispositif d'inspection (10) selon l'une des revendications précédentes, comprenant une interface spécifiée avec le bloc applicatif (2), dans lequel le bloc applicatif monté sur le dispositif d'inspection est amovible et interchangeable avec tout bloc applicatif d'un ensemble de blocs applicatifs présentant une interface propre à s'interfacer avec ladite interface spécifiée, et dans lequel des commandes depuis un bloc applicatif desdits blocs applicatifs qui est monté sur le dispositif d'inspection, et qui sont destinées au bloc de traitement (11) ou inversement depuis le bloc de traitement à destination du bloc applicatif, et relatives à un traitement d'image ou de mesures ou à un déplacement, ne sont mises en oeuvre par leur destinataire qu'à partir de la réalisation avec succès d'un processus d'appariement entre ledit bloc applicatif et le bloc de traitement où le bloc applicatif doit présenter un code stocké dans le bloc de traitement et dans le bloc applicatif préalablement au montage dudit bloc applicatif sur le dispositif d'inspection.

8. Dispositif d'inspection (10) selon l'une des revendications précédentes, et pesant moins de 20 kg ou décomposable en sous-ensembles pesant moins de 20 kg chacun.

9. Procédé d'inspection de sous-châssis de véhicule ferroviaire à l'aide d'un dispositif d'inspection (10) selon l'une des revendications précédentes, adapté pour se déplacer sous un véhicule ferroviaire entre les rails (8) de la voie (7) de circulation ferroviaire dudit véhicule ferroviaire, ledit procédé comprenant les étapes suivantes :
- déplacement le long des rails du dispositif d'inspection ;
- capture, par le bloc applicatif (2), d'images sous le châssis du véhicule ferroviaire inspecté ou mesures, par le bloc applicatif, de données relatives audit sous-châssis ; et délivrance au bloc de traitement (11) desdites données capturées ou mesurées ;
- traitement par le bloc de traitement du dispositif d'inspection, des données délivrées par le bloc applicatif et détermination, par le bloc de traitement, d'un statut d'inspection du véhicule ferroviaire inspecté en fonction d'au moins lesdites données traitées,
selon lequel ledit traitement comporte les étapes suivantes :
- identifier quel composant du véhicule ferroviaire figure sur une image capturée ;
- sélectionner, en fonction du composant identifié, un programme d'ordinateur d'inspection détectant des anomalies sur ledit composant,
fournir à l'issue de l'exécution dudit programme le statut d'inspection résultant de l'exécution dudit programme.

10. Procédé d'inspection (10) selon la revendication 9, le dispositif d'inspection (10) comprenant un bloc d'émission et réception de télécommunication sans fil (14), adapté pour émettre des images capturées ou traitées à destination d'une station de supervision (30), ledit procédé comprenant les étapes d'émettre, par le bloc de traitement, à destination de la station de supervision, via le bloc d'émission et réception, les données d'image associées avec un champ d'information indiquant ledit statut d'inspection.

## Patentansprüche

1. Vorrichtung (10) zur Inspektion des Untergestells eines Schienenfahrzeug, die geeignet ist, sich unter dem Schienenfahrzeug zwischen den Schienen (8) des Schienenweges (7) des Schienenfahrzeug zu bewegen, umfassend
- ein Motorsystem (9), das geeignet ist, die Inspektionsvorrichtung entlang der Schienen zu bewegen;
- einen Anwendungsblock (2), der mindestens ein Element aus einem Bildsensor, der angepasst ist, Bilder unter dem Chassis des inspizierten Schienenfahrzeug aufzunehmen, und einer Messvorrichtung, die angepasst ist, Messungen bezüglich des Untergestells durchzuführen, umfasst, wobei der Anwendungsblock geeignet ist, an einen Verarbeitungsblock (11) von dem Element aufgenommene oder gemessene Daten zu liefern;
wobei
- der Verarbeitungsblock in die Inspektionsvorrichtung integriert ist und angepasst ist, die von dem Anwendungsblock gelieferten Daten zu verarbeiten und einen Inspektionszustand des inspizierten Schienenfahrzeug abhängig von mindestens den verarbeiteten Daten zu bestimmen,
**dadurch gekennzeichnet, dass**:
der Verarbeitungsblock (11) außerdem angepasst ist, zu identifizieren, welche Komponente des Schienenfahrzeug auf dem aufgenommenen Bild erscheint, um abhängig von der identifizierten Komponente einen Rechner-Inspektionsprogramm auszuwählen, das Anomalien an der Komponente detektiert, um am Ende der Ausführung des Programms den aus der Ausführung des Programms resultierenden Inspektionsstatus zu liefern.

2. Inspektionsvorrichtung (10) nach Anspruch 1, bei der der Verarbeitungsblock (11) außerdem angepasst ist, das Motorsystem (9) gemäß einem Betriebsmodus abhängig von Steuerbefehlen, die in Echtzeit von einer Überwachungsstation (30) über einen drahtlosen Kommunikationsempfänger oder abhängig von vordefinierten Steuersequenzen, die in einem Speicher der Inspektionsvorrichtung gespeichert sind, oder abhängig von Befehlen, die von dem Anwendungsblock (2) dem Verarbeitungsblock geliefert werden, zu steuern.

3. Inspektionsvorrichtung (10) nach Anspruch 1 oder 2, die außerdem einen abnehmbaren Gelenkarm (3) umfasst, wobei die Inspektionsvorrichtung angepasst ist, eine potenziell gefährliche Gegebenheit zu detektieren und im Falle einer solchen Detektion in einen Sicherheitsmodus umzuschalten, der das Anhalten der Bewegung der Inspektionsvorrichtung entlang der Schienen (8) und das Zusammenziehen des Gelenkarms, wenn letzterer an der Inspektionsvorrichtung installiert ist, umfasst.

4. Inspektionsvorrichtung (10) nach Anspruch 3, die angepasst ist, jede potenziell gefährliche Gegebenheit einer oder mehrerer Arten, die aus den folgenden Arten gegeben sind, zu detektieren: Verlust der Kommunikation mit einer Überwachungsstation, unzureichendes Niveau bezüglich der Energieversorgung, Bewegung des inspizierten Schienenfahrzeug, Verlust der Fähigkeit der Inspektionsvorrichtung, sich zu lokalisieren, Vorhandensein eines Hindernisses in der Bewegungsrichtung der Inspektionsvorrichtung.

5. Inspektionsvorrichtung (10) nach einem der vorhergehenden Ansprüche, die einen drahtlosen Kommunikationssende- und -empfangsblock umfasst, der geeignet ist, aufgenommene oder verarbeitete Bilder an eine Überwachungsstation (30) zu senden, und der Verarbeitungsblock (11) außerdem angepasst ist, an die Überwachungsstation über den Sende- und Empfangsblock Bilddaten, die einem Informationsfeld zugeordnet sind, das dem Inspektionsstatus angibt, zu senden.

6. Inspektionsvorrichtung (10) nach einem der vorhergehenden Ansprüche, bei dem das Rechner-Inspektionsprogramm abhängig von dem aufgenommenen Bild detektiert, ob die Komponente eine Anomalie aufweist, kennzeichnet eine detektierte Anomalie und gibt in dem Informationsfeld oder in den zu sendenden Bilddaten die detektierte Anomalie und ihre Charakterisierung an.

7. Inspektionsvorrichtung (10) nach einem der vorliegenden Ansprüche, die eine mit dem Anwendungsblock (2) spezifizierte Schnittstelle umfasst, wobei der an der Inspektionsvorrichtung montierte Anwendungsblock lösbar und austauschbar mit jedem Anwendungsblock einer Gesamtheit von Anwendungsblöcken ist, die eine Schnittstelle aufweisen, die geeignet ist, sich mit der spezifizierten Schnittstelle in Verbindung zu setzen, und wobei die Befehle von einem Anwendungsblock der Anwendungsblöcke, der an der Inspektionsvorrichtung montiert ist, und die dem Verarbeitungsblock (11) oder umgekehrt von dem Verarbeitungsblock dem Anwendungsblock bestimmt sind und eine Verarbeitung eines Bildes oder Messungen oder eine Bewegung betreffen, nur von ihrem Empfänger von einer erfolgreichen Realisierung eines Paarungsprozesses zwischen dem Anwendungsblock und dem Verarbeitungsblock durchgeführt werden, wobei der Verarbeitungsblock einen in dem Verarbeitungsblock und in dem Anwendungsblock vor der Montage des Anwendungsblock an der Inspektionsvorrichtung gespeicherten Code aufweisen muss.

8. Inspektionsvorrichtung (10) nach einem der vorhergehenden Ansprüche, die weniger als 20 kg wiegt oder in Unterbaugruppen aufteilbar ist, die jeweils weniger als 20 kg wiegen.

9. Verfahren zur Inspektion eines Untergestells eines Schienenfahrzeugs mithilfe einer Inspektionsvorrichtung (10) nach einem der vorhergehenden Ansprüche, die geeignet ist, sich unter einem Schienenfahrzeug zwischen den Schienen (8) des Schienenweges (7) des Schienenfahrzeug zu bewegen, wobei das Verfahren die folgenden Schritte umfasst:
- Bewegen der Inspektionsvorrichtung entlang der Schienen;
- Aufnehmen von Bildern unter dem Chassis des inspizierten Schienenfahrzeugs durch den Anwendungsblock (2) oder Messen von Daten bezüglich des Untergestells durch den Anwendungsblock; und Liefern der aufgenommenen oder gemessenen Daten an den Anwendungsblock;
- Verarbeiten der von dem Anwendungsblock gelieferten Daten durch den Verarbeitungsblock der Inspektionsvorrichtung und Bestimmen eines Inspektionszustandes des inspizierten Schienenfahrzeug durch den Verarbeitungsblock in Abhängigkeit von mindestens den verarbeiteten Daten,
nach dem die Verarbeitung die folgenden Schritte aufweist:
- Identifizieren, welche Komponente des Schienenfahrzeugs auf dem aufgenommenen Bild erscheint;
- Auswählen abhängig von der identifizierten Komponente eines Rechner-Inspektionsprogramms, das Anomalien an der Komponente detektiert,
Liefern am Ende der Ausführung des Programms den resultierenden Inspektionszustand der Ausführung des Programms.

10. Inspektionsverfahren (10) nach Anspruch 9, wobei die Inspektionsvorrichtung (10) einen drahtlosen Kommunikationssende- und -empfangsblock umfasst, der geeignet ist, aufgenommene oder verarbeitete Bilder an eine Überwachungsstation (30) zu senden, wobei das Verfahren die Schritte des Sendens von Bilddaten, die einem Informationsfeld zugeordnet sind, das den Inspektionszustand angibt, von dem Verarbeitungsblock über den Sende- und Empfangsblock an die Überwachungsstation, umfasst.

## Claims

1. Inspection device (10) for an underframe of a rail vehicle, that is designed to move under a rail vehicle between the rails (8) of the railway track (7) of the rail vehicle, wherein it comprises:
- a motor system (9) designed to move the inspection device along the rails;
- an application block (2) comprising at least one element among an image sensor designed to capture images under the frame of the rail vehicle being inspected, and a measuring device designed to perform measurements relating to the underframe, wherein the application block is designed to deliver data captured or measured by the element to a processing block (11) ;
wherein
- the processing block is integrated in the inspection device and is designed to process the data delivered by the application block, and to determine an inspection status of the inspected rail vehicle as a function of at least the processed data,
**characterized in that** the processing block (11) is further designed to identify which component of the rail vehicle is on a captured image, for selecting, according to the identified component, an inspection computer program to detect anomalies on the component, for providing upon completion of the program, the inspection status resulting from the execution of that program.

2. Inspection device (10) according to claim 1, wherein the processing block (11) is further designed to control the motor system (9) according to an operating mode according to received control commands in real time from a monitoring station (30) via a wireless telecommunication receiver, or according to predefined command sequences stored in a memory of the inspection device, or according to commands delivered to the processing block by the application block (2).

3. Inspection device (10) according to claim 1 or 2, further comprising a detachable articulated arm (3), wherein the inspection device is designed to detect a potentially dangerous circumstance, and in the case of such a circumstance detection, to switch to a security mode comprising stopping the movement of the inspection device along the rails (8), and retraction of the articulated arm when the latter is installed on the inspection device.

4. Inspection device (10) according to claim 3, designed to detect any potentially dangerous circumstances of one or more of the following types: loss of communication with a monitoring station, insufficient power supply, movement of the rail vehicle being inspected, loss of the inspection device's ability to locate itself, presence of an obstacle in the direction of movement of the inspection device.

5. Inspection device (10) according to one of the preceding claims, comprising a wireless telecommunication transmission and reception block (14) that is designed to transmit captured or processed images to a monitoring station (30), while the processing block (11) is further designed to transmit to the monitoring station, via the transmission and reception block, the image data associated with an information field indicating the inspection status.

6. Inspection device (10) according to one of the preceding claims, wherein the inspection computer program detects whether the component has an abnormality as a function of the captured image, and characterizes a detected abnormality, and indicates the anomaly detected and its characterization in the information field or in the image data to be transmitted.

7. Inspection device (10) according to one of the preceding claims, comprising a specified interface with the application block (2), wherein the application block mounted on the inspection device is removable and interchangeable with any application block of a set of application blocks having an interface designed to interface with the specified interface, and in which commands from an application block of the application blocks, which is mounted on the inspection device, and which are intended for the processing block (11) or conversely from the processing block to the application block, and relating to image processing or measurements or displacement, are implemented by their recipient only following the successful completion of a process of pairing between the application block and the processing block, wherein the application block must present a code stored in the processing block and in the application block prior to mounting the application block on the inspection device.

8. Inspection device (10) according to one of the preceding claims, and weighing less than 20 kg or decomposable into subassemblies weighing less than 20 kg each.

9. Rail vehicle underframe inspection method using an inspection device (10) according to one of the preceding claims and designed to move under a rail vehicle between the rails (8) of the railroad track (7) of the rail vehicle, wherein the method comprises the following steps:
- moving the inspection device along the rails;
- capture, by the application block (2), of images under the frame of the rail vehicle being inspected or measurements, by the application block, of data relating to the underframe; and delivering the captured or measured data to the processing block (11);
- processing, by the processing unit of the inspection device, of data delivered by the application block and determination, by the processing block, of the inspection status of the inspected rail vehicle as a function of at least the processed data, wherein the processing comprises the following steps:
- identifying which component of the rail vehicle appears on a captured image;
- selecting, according to the identified component, an inspection computer program to detect anomalies on the component,
- provide at the end of the execution of that program, the inspection status resulting from the execution of that program.

10. Inspection method (10) according to claim 9, wherein the inspection device (10) comprises a wireless telecommunication transmission and reception block (14) that is designed to transmit captured or processed images to a monitoring station (30), wherein the method comprises the steps of transmitting, by the processing block, to the monitoring station, via the transmission and reception block, the image data associated with a field of information indicating the inspection status.
